# EUROPEAN PATENT APPLICATION

(11) **EP 4 797 003 A1**
(43) Date of publication of application: **26.08.2026**
(21) Application number: 25200468.4
(22) Date of filing: 05.09.2025
(51) Int. Cl.: G03G 15/00, H04N 1/00

(54) **CONTROL PANEL COVER AND IMAGE FORMING APPARATUS**

(30) Priority: 20.02.2025 JP 2025025816
(71) Applicant: Fujifilm Business Innovation Corp., Tokyo 107-0052 (JP)
(72) Inventor: ISHIDA, Mitsuyuki, Yokohama (JP)
(74) Representative: Meissner Bolte Partnerschaft mbB

(57) **Abstract**

A control panel cover includes an attachment member that allows the control panel cover to be attached to a control panel that at least includes an operable portion to be operated by a user and a light emitter that conveys information to the user with light emitted by the light emitter, a restrictor that restricts an operation to be performed on the operable portion when the control panel cover is attached to the control panel using the attachment member, and an expander that is located in an area irradiated by the light emitter with the light emitted from the light emitter when the control panel cover is attached to the control panel using the attachment member, to expand an area irradiated with the light.

## Description

### Background

### (i) Technical Field

The present disclosure relates to a control panel cover and an image forming apparatus. (ii) Related Art

For example, Japanese Unexamined Utility Model Registration Application Publication No. 6-31730 describes a control panel cover that is to be removably attached to the surface of a control panel including touch switches. The control panel cover leaves gaps between itself and the surface of the touch switches at portions facing the touch switches.

### Summary

Here, a case is assumed where a control panel at least includes an operable portion to be operated by a user and a light emitter that emits light to convey information to a user, and a control panel cover is to be attached to the control panel to prevent erroneous operations performed on the operable portion. In this case, when a part of the control panel cover is located over an area that is to be irradiated by the light emitter with light, the range irradiated with light is narrowed, and the control panel cover reduces the optical viewability. In contrast, a change of the luminous intensity of the light emitter of the control panel to enhance the luminous intensity to address the reduction of the optical viewability may increase costs.

Accordingly, it is an object of the present disclosure to reduce cost increase compared to a case where the luminous intensity of a light emitter is enhanced to address reduction of the viewability of light from the light emitter when a control panel cover is attached to a control panel.

According to an aspect of the present disclosure, there is provided a control panel cover that includes
an attachment member that allows the control panel cover to be attached to a control panel that at least includes an operable portion to be operated by a user and a light emitter that conveys information to the user with light emitted by the light emitter;
a restrictor that restricts an operation to be performed on the operable portion when the control panel cover is attached to the control panel using the attachment member; and
an expander that is located in an area irradiated by the light emitter with the light emitted from the light emitter when the control panel cover is attached to the control panel using the attachment member, to expand an area irradiated with the light.

A second aspect of the present disclosure is a control panel cover dependent on the first aspect, wherein the expander is disposed at an edge portion of the control panel cover.

A third aspect of the present disclosure is a control panel cover dependent on the second aspect, wherein an orientation of a surface of the control panel on which the operable portion is disposed is changeable by rotation, and wherein the edge portion at which the expander is disposed extends in an axial direction of the rotation.

A fourth aspect of the present disclosure is a control panel cover dependent on the third aspect, wherein, among a portion located close to the rotation axis and a portion located far from the rotation axis, the edge portion is the portion located close to the rotation axis.

A fifth aspect of the present disclosure is a control panel cover dependent on the third or fourth aspect, wherein a surface of the expander on which light from the light emitter is incident is a flat surface extending in the axial direction of the rotation.

A sixth aspect of the present disclosure is a control panel cover dependent on any one of the first to fifth aspects, wherein the restrictor includes a first restrictor that restricts an operation to be performed on an operation button serving as the operable portion by covering an entirety of the operation button, and a second restrictor that restricts an operation to be performed on the operation button by partially covering the operation button.

A seventh aspect of the present disclosure is a control panel cover dependent on the sixth aspect, wherein the second restrictor enables an operation to be performed on the operation button with an insertion of a member from an area other than a partially covered area of the operation button.

An eighth aspect of the present disclosure is a control panel cover dependent on the first aspect, wherein a surface of the control panel on which the operable portion is disposed has a shape having four sides, and wherein the attachment member is attachable to and removable from the control panel while being disposed to extend across three of four sides of the control panel, and including a cut in a middle portion of the remaining one side of the four sides, the remaining one side having two end portions that are left uncut.

A ninth aspect of the present disclosure is a control panel cover dependent on the eighth aspect, wherein the expander is disposed at the middle portion of the remaining one side.

A tenth aspect of the present disclosure is a control panel cover dependent on the eighth or ninth aspect, wherein the operable portion is a touch screen, wherein the attachment member includes a rib-shaped portion to retain a distance between the restrictor and the touch screen, and wherein the rib-shaped portion extends in a direction crossing the remaining one side.

An eleventh aspect of the present disclosure is an image forming apparatus, comprising: the control panel cover according to the first aspect.

According to the first aspect of the present disclosure, the cost increase is further reducible compared to a case where the luminous intensity of the light emitter is enhanced to address reduction of the viewability of light from the light emitter when a control panel cover is attached to a control panel.

According to the second aspect of the present disclosure, the expander is easily formed compared to a case not employing the structure where the expander is formed at an edge portion of a control panel cover.

According to the third aspect of the present disclosure, effects on visibility caused by a change of an angle of the control panel is further reducible compared to a case not employing the structure where the edge portion at which the expander is formed extends in the axial direction of rotation.

According to the fourth aspect of the present disclosure, effects on visibility caused by a change of an angle of the control panel is further reducible compared to a case not employing the structure where, among a portion located near a rotation axis and a portion located far from the rotation axis, the edge portion is located at the near portion.

According to the fifth aspect of the present disclosure, the surface of the expander on which light from the light emitter is incident has improved viewability compared to a case not employing the structure where the surface of the expander on which light from the light emitter incident is a flat surface extending in an axial direction of the rotation.

According to the sixth aspect of the present disclosure, a restrictor is capable of performing an operation corresponding to the function exerted by an operation button compared to a case not employing the structure including a first restrictor that restricts an operation by covering the entire surface of the operation button serving as an operable portion, and a second restrictor that restricts an operation by partially covering the operation button.

According to the seventh aspect of the present disclosure, the second restrictor is capable of more reliably reducing erroneous operations compared to a case not employing the structure where the operation button is operable with insertion of a member from an area other than the area partially covered by the operation button.

According to the eighth aspect of the present disclosure, an attachment member is capable of improving the performance of an attachment or detachment operation compared to a case not employing the structure where the attachment member is removably attached to the control panel by being formed to extend across three of four sides of the control panel, and including a cut in a middle portion of the remaining one side of the four sides, the remaining one side having two end portions that are left uncut.

According to the ninth aspect of the present disclosure, the expander is easily formed compared to a case not employing the structure where the expander is formed at the middle portion of the remaining one side.

According to the tenth aspect of the present disclosure, a distance between the restrictor and the touch screen is more reliably ensured compared to a case not employing the structure where the rib-shaped portion extends in a direction crossing the remaining one side.

According to the eleventh aspect of the present disclosure, the cost increase is reducible compared to a case where the luminous intensity of the light emitter is enhanced to address reduction of the viewability of light from the light emitter when the control panel cover is attached to the control panel.

### Brief Description of the Drawings

Exemplary embodiments of the present disclosure will be described in detail based on the following figures, wherein:
Fig. 1 is a structure diagram of an image forming system to which the present exemplary embodiment is applied;
Figs. 2A and 2B are right side views illustrating a change of a position of an operation device changed by a movable holder, where Fig. 2A illustrates the operation device in a standing state, and Fig. 2B illustrates the operation device in a lying state;
Fig. 3 is a partially cross-sectional view of the internal structure of the operation device;
Fig. 4 is a right side view illustrating the positional relationship between a light emitting device and a cover member;
Fig. 5 is a perspective view of a light emitter of the optical member and the expander of the cover member;
Fig. 6 is a perspective view of the operation device and the cover member;
Figs. 7A, 7B, 7C, 7D, and 7E are diagrams of the shape of the cover member, where Fig. 7A is a plan view, Fig. 7B is a front view, Fig. 7C is a bottom view, Fig. 7D is a right side view, and Fig. 7E is a rear view; and
Fig. 8 is a perspective view of the shape of the cover member.

### Detailed Description

With reference to the attached drawings, exemplary embodiments of the present disclosure are described below in detail.

### Image Forming System 100

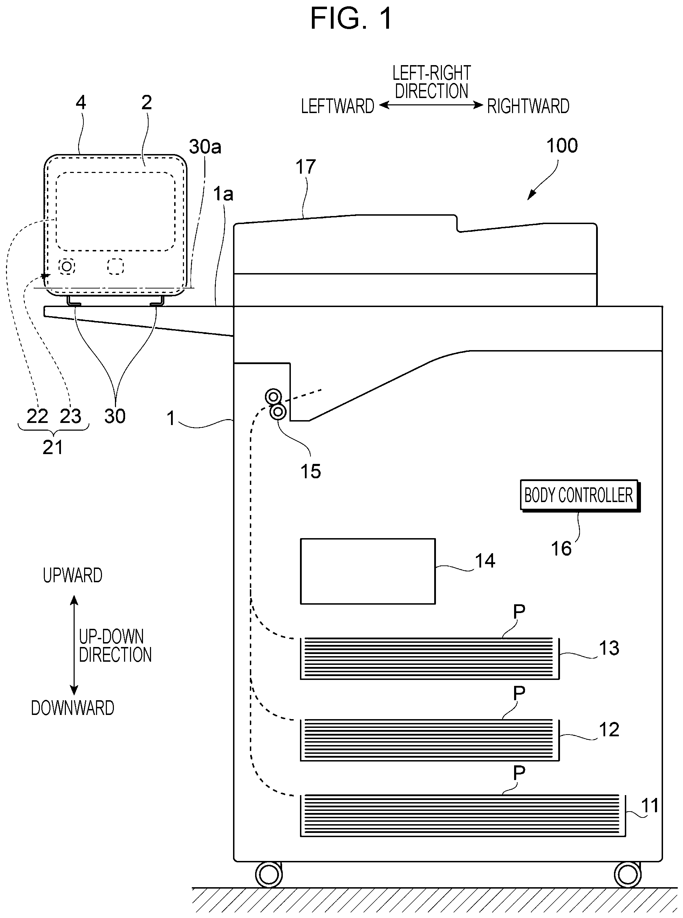

Fig. 1 is a structure diagram of an image forming system 100 to which the present exemplary embodiment is applied. The image forming system 100 includes an image forming apparatus 1 that forms images using, for example, electrophotography on recording media such as sheets P, and an operation device 2 that operates the image forming apparatus 1.

A cover member 4 is attached to the operation device 2. The operation device 2 is an example of a control panel, and the cover member 4 is an example of the control panel cover.

The image forming system 100 according to the present exemplary embodiment is an example of an image forming apparatus including a control panel cover.

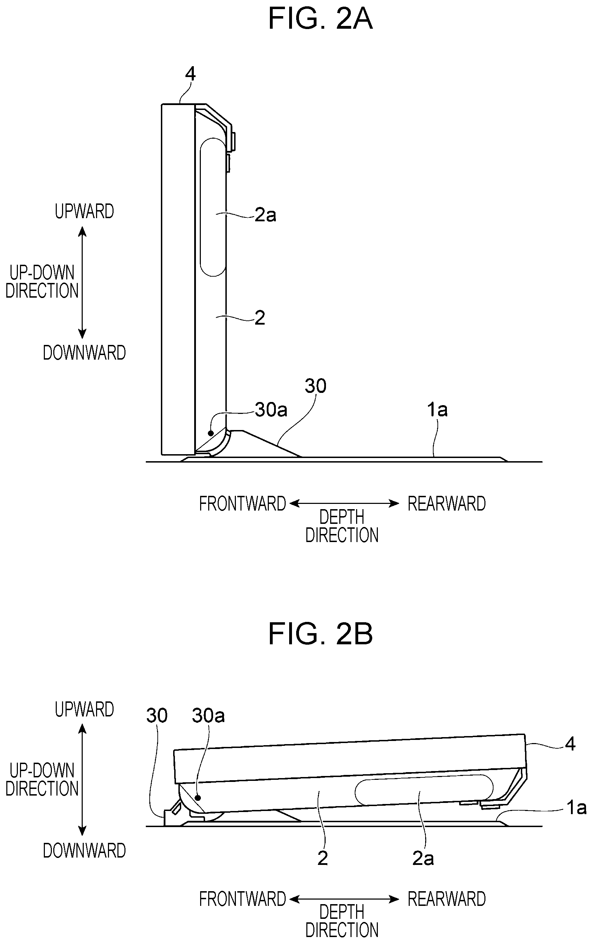

In the description below, the up-down direction (vertical direction) in Fig. 1 or Fig. 2 may simply be referred to as "an up-down direction". In addition, the upward direction along an axis of the up-down direction in Fig. 1 or Fig. 2 may simply be referred to as "upward", and the downward direction along an axis of the up-down direction in Fig. 1 or Fig. 2 may simply be referred to as "downward".

The left-right direction in Fig. 1 may simply be referred to as "a left-right direction". The leftward direction along an axis of the left-right direction in Fig. 1 may simply be referred to as "leftward", and the rightward direction along an axis of the left-right direction in Fig. 1 may simply be referred to as "rightward".

The depth direction of the plane of Fig. 1, or the depth direction in Fig. 2 may simply be referred to as "a depth direction". The leftward direction along an axis of the depth direction in Fig. 2 may simply be referred to as "frontward", and the rightward direction along an axis of the depth direction in Fig. 2 may simply be referred to as "rearward".

### Image Forming Apparatus 1

The image forming apparatus 1 includes sheet containers 11, 12, and 13 that accommodate sheets P, and an image forming portion 14 that forms images on the sheets P. The image forming apparatus 1 further includes discharging rollers 15 that discharge the sheets P on which images are formed, and a body controller 16 that controls the operation of the image forming apparatus 1. The image forming apparatus 1 further includes a movable document feeder 17 that sequentially transports multiple documents.

The sheet containers 11 to 13 accommodate sheets P of different sizes or different types. In the illustrated example, the sheet containers 11 to 13 are allowed to be drawn out to the near side in the drawings, that is, to the front side in the depth direction. In the state where the sheet containers 11 to 13 are drawn out, for example, a user fills the sheet containers 11 to 13 with sheets P.

The image forming portion 14 forms images on the sheets P transported from the sheet containers 11 to 13. The image forming portion 14 illustrated in the drawing forms images on the sheets P with electrophotography by transferring toner adhering to the photoconductor to the sheets P. However, the image forming portion 14 may form images with an inkjet method by ejecting ink onto the sheets P.

The discharging rollers 15 discharge the sheets P on which images are formed by the image forming portion 14. The discharging rollers 15 in the drawing are a pair of rollers. When the pair of rollers rotate, the sheets P are discharged from the image forming apparatus 1.

The body controller 16 controls the operations of components included in the image forming apparatus 1. The body controller 16 in the drawing receives signals indicating the details of the operation to be performed on the operation device 2.

The document feeder 17 is a device that feeds documents one by one to the area in which an image of each document is read, and is rotatable with respect to the body of the image forming apparatus 1. The document feeder 17 has a function as a document table cover that covers platen glass of the image forming apparatus 1, and opens or closes relative to the platen glass.

The operation of the image forming apparatus 1 is described now.

First, with an instruction signal output from the body controller 16 in response to the signal from the operation device 2, the sheets P are fed one by one from the sheet containers 11 to 13. After the image forming portion 14 forms images on the sheets P, the sheets P on which the images are formed are discharged by the discharging rollers 15.

### Operation Device 2

The operation device 2 includes an operable portion 21 electrically connected to the image forming apparatus 1 to operate the image forming apparatus 1, and movable holders 30 that hold the operable portion 21 while allowing the operable portion 21 to move.

The image forming apparatus 1 includes a mount board 1a having an attachment surface on which the operation device 2 is attached. Each movable holder 30 has a movable portion.

The operation device 2 is attached to the attachment surface of the mount board 1a with the movable portions of the movable holders 30. The operation device 2 is thus capable of changing its position with respect to the mount board 1a.

The operable portion 21 is disposed on the front side of the operation device 2.

The operable portion 21 includes a touch screen portion 22 that has a function of displaying an image for operation on the display area and a function of receiving an instruction made through a touch on the display area. The operable portion 21 further includes an input portion 23 in which various buttons are disposed.

In the present exemplary embodiment, the touch screen portion 22 is located on the surface of the operable portion 21 in an upper area with respect to the center, and the input portion 23 is located below the touch screen portion 22.

The operable portion 21, more specifically, the touch screen portion 22 and the input portion 23 are examples of the operable portions operated by users.

The touch screen portion 22 is a capacitive touch screen that detects the location of a touch from a weak change in capacitance. Instead of this type, the touch screen portion 22 may be another type, for example, may be a resistive touch screen that detects the location when electrical conduction occurs at the contact point between the opposing electrodes.

In the present exemplary embodiment, the operable portion 21 includes the touch screen portion 22, but may have another structure. Instead of the touch screen portion 22, the operable portion 21 may include a display that displays an image for operation, and an instruction portion located at a different position from the display.

As described above, the cover member 4 is attached to the operation device 2. The cover member 4 covers at least the operable portion 21. Thus, in Fig. 1, the touch screen portion 22 and the input portion 23 that appear on the outer surface of the operation device 2 are indicated with broken lines.

The operation device 2 is rotatable about a rotation axis 30a indicated with a dot-and-dash line. The rotation axis 30a extends in the left-right direction. The left-right direction is an example of an axial direction of rotation.

The operation device 2 has a surface on which the operable portion 21 is disposed and that has four sides, and the cover member 4 has a shape corresponding to the shape of the operation device 2.

### Change of Position of Operation Device 2 Changed by Movable Holder 30

Figs. 2A and 2B are right side views illustrating a change of a position of the operation device 2 changed by a movable holder 30, where Fig. 2A illustrates the operation device 2 in a standing state, and Fig. 2B illustrates the operation device 2 in a lying state. The cover member 4 described above is attached to the operation device 2 in Fig. 2. The movable holder 30 is attached to the mount board 1a.

The movable holders 30 each have the rotation axis 30a indicated by a dot in Figs. 2A and 2B. As described above, the rotation axis 30a extends in the left-right direction.

The operation device 2 is rotatable about the rotation axis 30a with respect to the mount board 1a. The operation device 2 is changeable to an intermediate position between the standing position illustrated in Fig. 2A, and the lying position illustrated in Fig. 2B, and capable of retaining that position.

The position in Fig. 2A corresponds to the position in Fig. 1 in which the operation device 2 is viewed from the front.

In the present exemplary embodiment, the operation device 2 is rotatable with respect to the mount board 1a. More specifically, the operation device 2 is capable of changing the orientation of the surface on which the operable portion 21 is disposed by rotating about the rotation axis 30a. The operation device 2 is attached to the upper surface of the mount board 1a.

Alternatively, the operation device 2 may be slidable in the front-rear direction with respect to the mount board 1a. Still alternatively, the operation device 2 may be fixed to the mount board 1a. Still alternatively, the operation device 2 may be attached to a place other than the upper surface of the mount board 1a, such as a lower surface of the mount board 1a.

As illustrated in Fig. 2A or 2B, the operation device 2 has a recess 2a in the right side surface. The recess 2a is capable of receiving the fingers of the user when the user is to change the position of the operation device 2. The operation device 2 may also have another recess 2a in the left side surface.

In the present exemplary embodiment, the operation device 2 is capable of changing its angle with respect to the mount board 1a, but this is not the only possible example. The operation device 2 may be incapable of changing its angle.

### Internal Structure of Operation Device 2

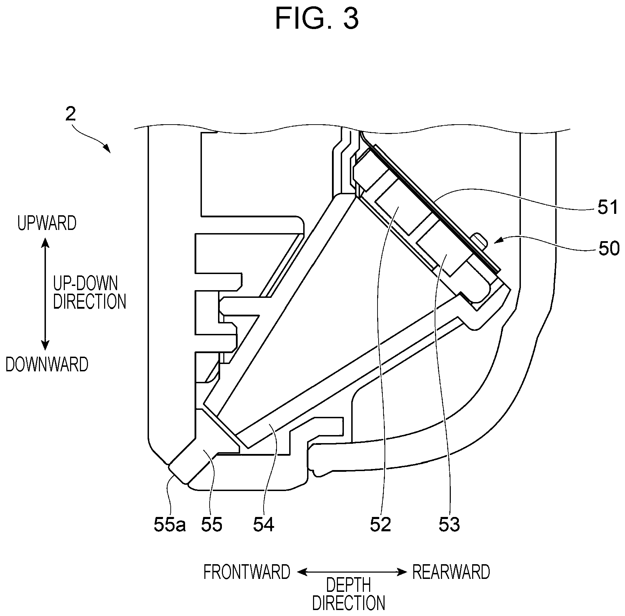

Fig. 3 is a partially cross-sectional view of the internal structure of the operation device 2. Fig. 3 does not illustrate the cover member 4.

As illustrated in Fig. 3, the operation device 2 includes a light emitting device 50.

The light emitting device 50 includes a substrate 51, and a first light emitter 52 and a second light emitter 53 mounted on one surface of the substrate 51. The first light emitter 52 and the second light emitter 53 emit light of different colors. For example, the first light emitter 52 emits blue light, and the second light emitter 53 emits red light.

The light emitting device 50 further includes a reflector 54 that reflects light from the first light emitter 52 and the second light emitter 53. The reflector 54 includes an incident port located nearer the substrate 51 and through which light from the first light emitter 52 and the second light emitter 53 enter, a reflection surface that reflects the incident light, and an emerging port through which light reflected off the reflection surface emerges. The emerging port has a smaller optical path width than the incident port. The reflection surface of the reflector 54 is inclined to have a smaller optical path width as it is spaced apart from the substrate 51.

The light emitting device 50 further includes an optical member 55 that is located at the emerging port of the reflector 54, and that emits light from the first light emitter 52 and the second light emitter 53 to the outside of the operation device 2. The optical member 55 includes a light emitter 55a that emits light. The light emitter 55a is exposed to form a portion of the outer surface of the operation device 2.

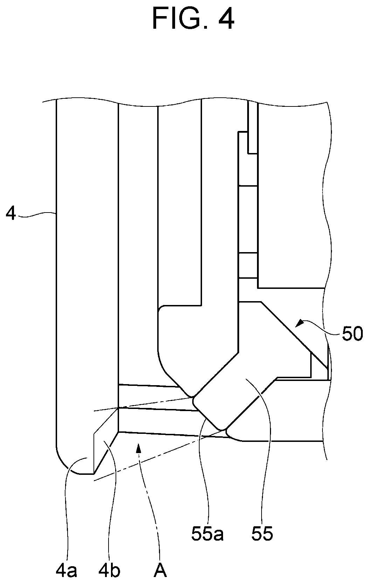

The optical member 55 is a lens member. As illustrated in Fig. 3, light from the light emitting device 50 is directed downward, but is refracted by the optical member 55, and light from the light emitter 55a is directed upward in the up-down direction (refer to Fig. 4, described below).

More specifically, light from the light emitting device 50 is alarm light to inform the user whether the image forming apparatus 1 is in the normal or abnormal state. The user perceives whether the image forming apparatus 1 is in the normal state based on the color of light emitted from the light emitter 55a of the optical member 55. For example, when the image forming apparatus 1 is in the normal state, blue alarm light is emitted, and when the image forming apparatus 1 is in the abnormal state, red alarm light is emitted. Thus, the blue or red alarm light from the light emitter 55a is to have viewability, and is to be perceivable or identifiable by the user. Particularly, in a situation where the states of multiple image forming apparatuses 1 that are in full-time operation are to be monitored by few operators, operators are to easily perceive whether the image forming apparatus 1 is in the normal or abnormal condition with alarm light regardless of when the operators are located away from the image forming apparatus 1.

Instead of lighting up, the light emitting device 50 may flash on and off. When the light emitting device 50 flashes on and off, alarms may be changed by changing the intervals between lighting. Furthermore, light from the light emitting device 50 may be changed in the way of being viewed, such as a change in the amount of light or the area that is to be lit.

The light emitter 55a is an example of a light emitter that conveys information to the user using light emission.

The light emitting device 50 extends in the left-right direction (direction perpendicular to the plane of Fig. 3). More specifically, the substrate 51 of the light emitting device 50 extends in the left-right direction, and the first light emitter 52 and the second light emitter 53 are disposed at a predetermined interval in the left-right direction.

The incident port and the emerging port of the reflector 54 extend in the left-right direction. The reflection surface of the reflector 54 includes a pair of flat surfaces extending in the left-right direction and opposing each other.

### Positional Relationship between Light Emitting Device 50 and Cover Member 4

Fig. 4 is a right side view illustrating the positional relationship between the light emitting device 50 and the cover member 4, and corresponds to Fig. 3.

As illustrated in Fig. 4, light emitted from the light emitter 55a of the optical member 55 is incident on a lower end portion 4a of the cover member 4. More specifically, the lower end portion 4a of the cover member 4 is located in an area A irradiated by the light emitter 55a with light.

Thus, in the structure illustrated in Fig. 4, the lower end portion 4a of the cover member 4 narrows the area irradiated by the light emitter 55a with the alarm light from the light emitter 55a, and reduces the viewability from the user. To address such reduction of the viewability, luminous intensity of the first light emitter 52 and the second light emitter 53 (refer to Fig. 3) may be enhanced, but the enhancement in luminous intensity may increase the cost.

The present exemplary embodiment includes an expander 4b at the lower end portion 4a of the cover member 4 to diffuse alarm light from the light emitter 55a to increase the irradiation area.

Thus, the lower end portion 4a of the cover member 4 is located within the area irradiated by the light emitter 55a with alarm light from the light emitter 55a. When the expander 4b is not included, the lower end portion 4a has a rough surface, and the alarm light from the light emitter 55a reflects diffusely in various directions. Thus, the amount of transmitted light that transmits through the lower end portion 4a is reduced, and viewability of the alarm light viewed by the user is reduced.

In contrast, the present exemplary embodiment includes the expander 4b at the lower end portion 4a. The expander 4b has a shape of a chamfer obtained by obliquely cutting the corner of the lower end portion 4a. More specifically, the expander 4b is formed from, for example, a C chamfer plane, or chamfered at an angle of 45 degrees. The expander 4b may be chamfered at an angle other than 45 degrees.

When the flat expander 4b is disposed at the lower end portion 4a, diffuse reflection of the alarm light at the lower end portion 4a is reduced. Accordingly, the amount of diffuse transmitted light caused by scattering inside the lower end portion 4a is increased, and the amount of directly transmitted light is also increased. Thus, the range irradiated with the alarm light that is viewable by the user is expanded. Expansion of the light irradiation range by the expander 4b is to expand the range in which the alarm light is viewable with the increase of the amount of diffuse transmitted light.

The expander 4b is an example of an expander that expands the light irradiation range.

In the present exemplary embodiment, the expander 4b is disposed at the lower end portion 4a of the cover member 4, that is, at the far end portion. The expander 4b is disposed at the far end portion of the cover member 4 to correspond to the position of the light emitter 55a of the light emitting device 50. Thus, when the light emitter 55a is located at a position other than the far end portion, the expander 4b may be located to correspond to that position. For example, the position other than the far end portion may be a position of the cover member 4 nearer the center than the far end portion when viewed from the front.

When the expander 4b is located at the far end portion of the cover member 4, the expander 4b is more easily formed compared to the case where the expander 4b is formed at a position other than the far end portion.

The lower end portion 4a of the cover member 4 or the far end portion described here is an example of the edge portion of the control panel cover. The area A is an example of the area irradiated by the light emitter with light.

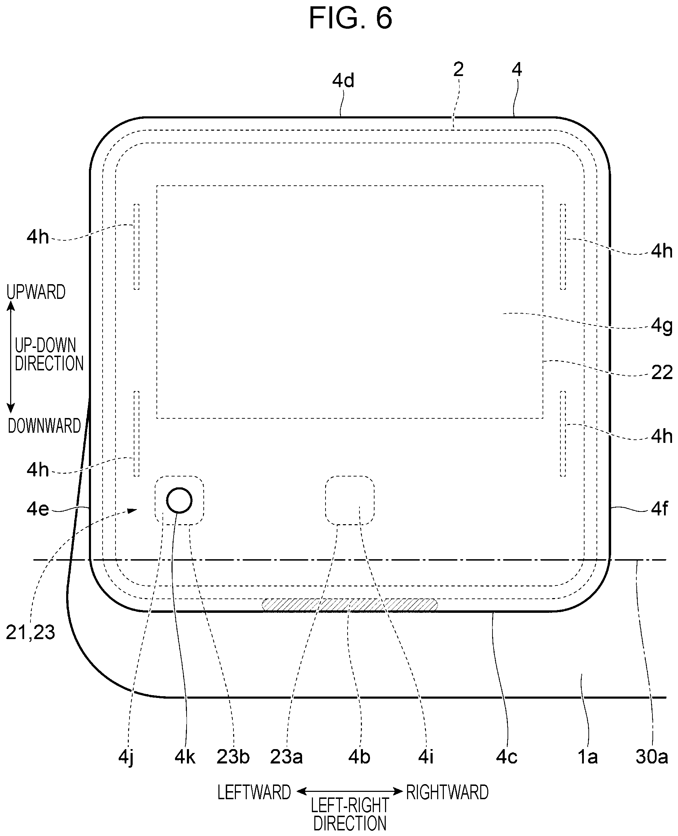

In the present exemplary embodiment, the lower end portion 4a of the cover member 4 or the far end portion extends in the direction of the rotation axis 30a (for example, refer to Fig. 2 or Fig. 6), but this is not the only possible example. More specifically, the lower end portion 4a of the cover member 4 or the far end portion may extend in a direction crossing the rotation axis 30a in a modified example.

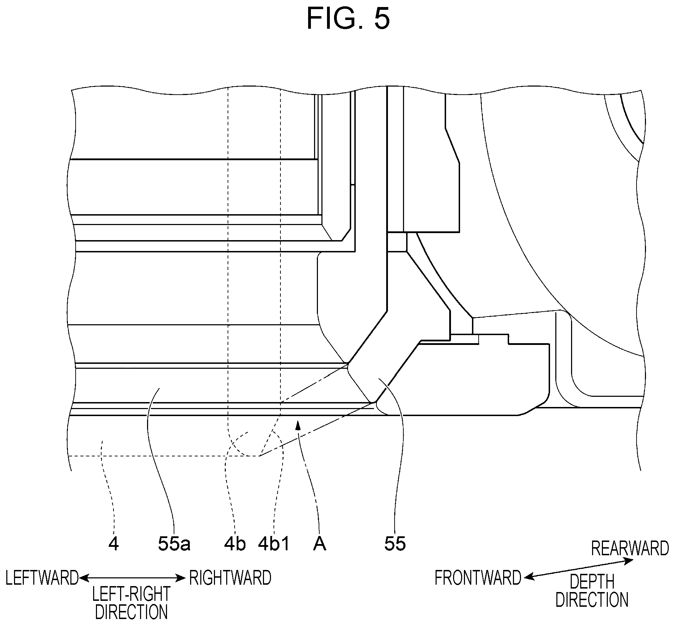

Fig. 5 is a perspective view of the light emitter 55a of the optical member 55 and the expander 4b of the cover member 4. In Fig. 5, the cover member 4 is indicated with broken lines.

As illustrated in Fig. 5, the optical member 55 extends in the left-right direction, and the light emitter 55a also extends in the left-right direction. The shapes of the optical member 55 and the light emitter 55a correspond to the emerging port of the reflector 54 (refer to Fig. 3).

Light from the light emitter 55a is incident on a surface 4b1 of the expander 4b. The surface 4b1 is a flat surface extending in the rotation axis 30a (refer to Fig. 2). As described above, the surface 4b1 is a C chamfer plane. The surface 4b1 is an example of a surface on which light from the light emitter is incident.

Fig. 6 is a perspective view of the operation device 2 and the cover member 4. The operation device 2 illustrated in Fig. 6 is located in an intermediate position between the standing state illustrated in Fig. 2A and the lying state illustrated in Fig. 2B.

First, the cover member 4 is described.

### Cover Member 4

As illustrated in Fig. 6, the cover member 4 has edge portions 4c and 4d extending in the left-right direction, and edge portions 4e and 4f extending in the up-down direction. The edge portions 4c to 4f of the cover member 4 correspond to four sides of the operation device 2 when viewed from the front.

The edge portion 4c is located close to the rotation axis 30a, and the edge portion 4d is located far from the rotation axis 30a. When viewed from the front, the edge portion 4e is located on the left, and the edge portion 4f is located on the right.

In the present exemplary embodiment, of the edge portions 4c and 4d, the expander 4b is located at the edge portion 4c near the rotation axis 30a. The expander 4b may be located at the edge portion 4d far from the rotation axis 30a. The expander 4b may be located at the edge portion 4e or the edge portion 4f of the cover member 4.

In the present exemplary embodiment, the expander 4b of the cover member 4 is disposed at a part of the edge portion 4c of the cover member 4, instead of throughout the edge portion 4c. More specifically, the expander 4b is located at the middle portion of the edge portion 4c in the left-right direction.

The position of the expander 4b of the cover member 4 corresponds to the position of the light emitter 55a of the operation device 2.

The expander 4b is capable of enhancing the viewability of the alarm light viewed by the user regardless of when the operation device 2 is in the standing position (refer to Fig. 2A).

The expander 4b may extend throughout the edge portion 4c in a modification example. The expander 4b preferably has a uniform shape throughout in the left-right direction, but may have a shape that changes as it extends in either the left or right direction.

### Operable Portion 21 of Operation Device 2 and Cover Member 4

The operable portion 21 of the operation device 2 and the cover member 4 are described now. As described above, the operable portion 21 includes the touch screen portion 22 and the input portion 23.

As illustrated in Fig. 6, the cover member 4 includes a touch screen restrictor 4g that covers the touch screen portion 22 to restrict instruction to be made through the touch screen portion 22. The cover member 4 further includes four rib-shaped portions 4h on a rear surface 41a.

The rib-shaped portions 4h extend in the up-down direction. The rib-shaped portions 4h extend in the direction crossing the edge portion 4c. The rib-shaped portions 4h may extend in a direction other than the up-down direction.

The direction that crosses the edge portion 4c is an example of a direction crossing the remaining one side.

The rear surface 41a is a surface of the cover member 4 that, when the cover member 4 is attached to the operation device 2, faces the operable portion 21 of the operation device 2. In Fig. 6, the four rib-shaped portions 4h are illustrated with broken lines.

More specifically, the four rib-shaped portions 4h are disposed on the surface of the cover member 4 other than the surface facing the touch screen portion 22. The touch screen restrictor 4g may be located in an area surrounded by the four rib-shaped portions 4h. Compared to the structure not including the four rib-shaped portions 4h, a gap between the touch screen restrictor 4g of the cover member 4 and the touch screen portion 22 of the operation device 2 is increased. The four rib-shaped portions 4h retain the distance between the touch screen restrictor 4g of the cover member 4 and the touch screen portion 22 of the operation device 2.

In the operation device 2, the input portion 23 of the operable portion 21 includes a first button 23a on the right and a second button 23b on the left when viewed from the front.

The first button 23a is, for example, a push button operated to display a home screen of the touch screen portion 22. The home screen is a screen displayed first time after the operation device 2 is turned on, and is capable of changing the display contents by changing the settings.

The second button 23b is, for example, a push button operated to turn on or off the operation device 2. When the second button 23b is pushed while the operation device 2 is turned off, the operation device 2 is turned on. When the second button 23b is pushed while the operation device 2 is turned on, the operation device 2 is turned off.

The structure of the cover member 4 when the operation device 2 includes the input portion 23 is described.

The cover member 4 includes a first button restrictor 4i that restricts a push on the first button 23a, and a second button restrictor 4j that restricts a push on the second button 23b.

The first button restrictor 4i covers the entirety of the first button 23a.

The second button restrictor 4j covers a part of the second button 23b. More specifically, the second button restrictor 4j has a through-hole 4k through which a part of the second button 23b is exposed.

The through-hole 4k has a size that barely accommodates the fingers of the user for pushing the second button 23b. More specifically, the through-hole 4k has a size that merely accommodates the tip of a writing tool such as a pen. This structure reduces an erroneous operation of pushing the second button 23b, and copes with a case in which the second button 23b is to be pushed without removing the cover member 4. More specifically, the second button 23b is capable of being pushed with insertion of the tip of the writing tool into the through-hole 4k.

The case in which the second button 23b is to be pushed is a case of an emergency where the operation of the image forming apparatus 1 is to be stopped.

The first button restrictor 4i and the second button restrictor 4j are examples of restrictors. The first button restrictor 4i is an example of a first restrictor, and the second button restrictor 4j is an example of a second restrictor. The through-hole 4k is an example of an area other than the area that is partially covered. The tip of the writing tool is an example of a member.

### Shape of Cover Member 4

The shape of the cover member 4 is described now, together with the components described above.

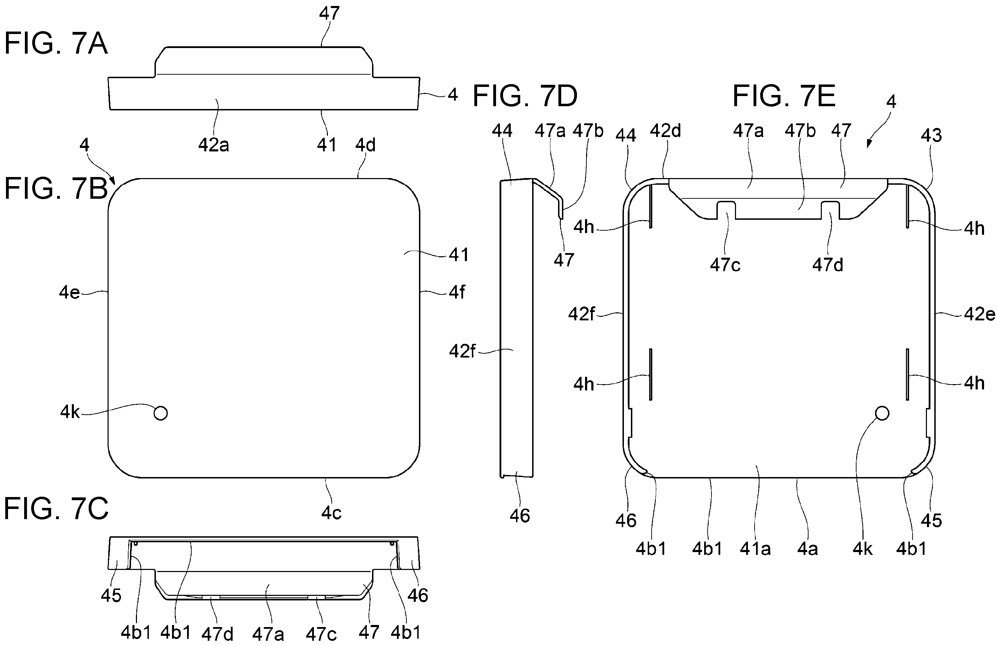

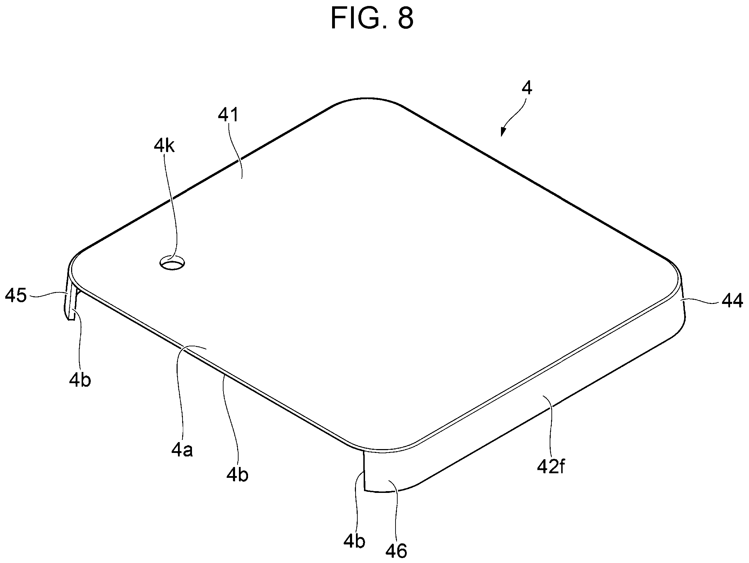

Figs. 7A, 7B, 7C, 7D, and 7E and Fig. 8 are diagrams of the shape of the cover member 4. Figs. 7A, 7B, 7C, 7D, and 7E are projected plans, and Fig. 8 is a perspective view. Fig. 7A is a plan view, Fig. 7B is a front view, Fig. 7C is a bottom view, Fig. 7D is a right side view, and Fig. 7E is a rear view.

As illustrated in Figs. 7B and 7E, a front surface portion 41 has the through-hole 4k described above. As illustrated in Fig. 7E, on the rear surface 41a of the front surface portion 41, the four rib-shaped portions 4h described above are disposed.

As illustrated in Fig. 7B, the cover member 4 has the edge portion 4c, serving as a lower edge of the front surface portion 41, the edge portion 4d, serving as an upper edge of the front surface portion 41, the edge portion 4e, serving as a left edge of the front surface portion 41, and the edge portion 4f, serving as a right edge of the front surface portion 41.

More specifically, as illustrated in Fig. 7E, the cover member 4 includes side surface portions 42d, 42e, and 42f extending rearward from the front surface portion 41. The side surface portion 42d is disposed to correspond to the edge portion 4d. The side surface portions 42e and 42f are disposed to correspond to the edge portions 4e and 4f.

As illustrated in Fig. 7E or Fig. 8, the cover member 4 includes a corner portion 43 that connects the side surface portion 42d and the side surface portion 42e to each other, and a corner portion 44 that connects the side surface portion 42d and the side surface portion 42f to each other. The cover member 4 includes a corner portion 45 at the lower end of the side surface portion 42e, and a corner portion 46 at the lower end of the side surface portion 42f.

The side surface portions 42d to 42f and the corner portions 43 to 46 have a dimension in the front-rear direction.

As is clear from Fig. 7C or 7E, the side surface portion such as the side surface portions 42d to 42f is not formed between the corner portion 45 and the corner portion 46 of the cover member 4. More specifically, as illustrated in Fig. 7C or 7E, among the edge portions 4c to 4f of the cover member 4 illustrated in Fig. 7B, the edge portion 4c located at the bottom has a cut at the middle portion of the edge portion 4c, while the corner portions 45 and 46 are left uncut.

The edge portions 4c to 4f are examples of the four sides of the control panel. The edge portions 4d to 4f are examples of the three sides, and the edge portion 4c is an example of the remaining one side. The corner portions 45 and 46 are examples of both end portions.

As illustrated in Fig. 7A, 7C, 7D, and 7E, the cover member 4 includes an engagement portion 47 extending downward from the rear end of the side surface portion 42d. The engagement portion 47 is disposed to correspond to the edge portion 4d.

As illustrated in Fig. 7D, the engagement portion 47 includes a portion 47a extending obliquely rearward from the side surface portion 42d and a portion 47b extending downward from the portion 47a. As illustrated in Fig. 7E, the portion 47b has two cut portions 47c and 47d at different positions in the left-right direction.

The cover member 4 is attachable to and removable from the operation device 2. More specifically, the cover member 4 is attachable to the operation device 2 without using a tool, and removable from the operation device 2 without using a tool. The cover member 4 is attached to the operation device 2 using elastic deformation.

More specifically, in the cover member 4, the corner portions 43 to 46 are retained at the four corners of the operation device 2, and the engagement portion 47 is engaged with the rear surface of the operation device 2.

The corner portions 43 to 46 are integrated with the side surface portions 42d to 42f. Thus, the cover member 4 has secured rigidity throughout three orientations, that is, at the edge portions 4d to 4f. The cover member 4 has lower rigidity in one orientation, that is, at the edge portion 4c, than at the edge portions 4d to 4f.

Alternatively, the cover member 4 may be screwed on the operation device 2 using a tool.

The cover member 4 is engaged with the rear surface of the operation device 2 using the engagement portion 47. Thus, the cover member 4 is reliably attachable to the operation device 2 by holding the cover member 4 between the front surface portion 41 and the engagement portion 47 of the cover member 4.

The engagement portion 47 includes two cut portions 47c and 47d at the portion 47b. Thus, the engagement portion 47 is easily deformable. Thus, the cover member 4 attached to the operation device 2 is removable by being elastically deformed with an external force.

The side surface portions 42d to 42f, the corner portions 43 to 46, and the engagement portion 47 of the cover member 4 are examples of attachment members used for attachment to the control panel.

More specifically, the expander 4b is disposed at the lower end portion 4a having a cut shape between the corner portion 45 and the corner portion 46 of the cover member 4. More specifically, the expander 4b is formed from the surface 4b1 formed by a C chamfer plane. The surface 4b1 of the expander 4b extends in the direction of the rotation axis 30a (refer to Fig. 6).

As illustrated in Fig. 7C or 7E, the surface 4b1 is also disposed at the end surface of the corner portion 45 and the end surface of the corner portion 46. Thus, the expander 4b further enhances the viewability of alarm light.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

### Appendix

(((1))) A control panel cover, comprising:
   an attachment member that allows the control panel cover to be attached to a control panel that at least includes an operable portion to be operated by a user and a light emitter that conveys information to the user with light emitted by the light emitter;
   a restrictor that restricts an operation to be performed on the operable portion when the control panel cover is attached to the control panel using the attachment member; and
   an expander that is located in an area irradiated by the light emitter with the light emitted from the light emitter when the control panel cover is attached to the control panel using the attachment member, to expand an area irradiated with the light.
(((2))) The control panel cover according to (((1))),
   wherein the expander is disposed at an edge portion of the control panel cover.
(((3))) The control panel cover according to (((2))),
   wherein an orientation of a surface of the control panel on which the operable portion is disposed is changeable by rotation, and
   wherein the edge portion at which the expander is disposed extends in an axial direction of the rotation.
(((4))) The control panel cover according to (((3))),
   wherein, among a portion located close to the rotation axis and a portion located far from the rotation axis, the edge portion is the portion located close to the rotation axis.
(((5))) The control panel cover according to (((3))) or (((4))),
   wherein a surface of the expander on which light from the light emitter is incident is a flat surface extending in the axial direction of the rotation.
(((6))) The control panel cover according to any one of (((1))) to (((5))),
   wherein the restrictor includes
   a first restrictor that restricts an operation to be performed on an operation button serving as the operable portion by covering an entirety of the operation button, and
   a second restrictor that restricts an operation to be performed on the operation button by partially covering the operation button.
(((7))) The control panel cover according to (((6))),
   wherein the second restrictor enables an operation to be performed on the operation button with an insertion of a member from an area other than a partially covered area of the operation button.
(((8))) The control panel cover according to (((1))),
   wherein a surface of the control panel on which the operable portion is disposed has a shape having four sides, and
   wherein the attachment member is attachable to and removable from the control panel while being disposed to extend across three of four sides of the control panel, and including a cut in a middle portion of the remaining one side of the four sides, the remaining one side having two end portions that are left uncut.
(((9))) The control panel cover according to (((8))),
   wherein the expander is disposed at the middle portion of the remaining one side.
(((10))) The control panel cover according to (((8))) or (((9))),
   wherein the operable portion is a touch screen,
   wherein the attachment member includes a rib-shaped portion to retain a distance between the restrictor and the touch screen, and
   wherein the rib-shaped portion extends in a direction crossing the remaining one side.
(((11))) An image forming apparatus, comprising:
   the control panel cover according to (((1))).

According to (((1))) of the present disclosure, the cost increase is further reducible compared to a case where the luminous intensity of the light emitter is enhanced to address reduction of the viewability of light from the light emitter when a control panel cover is attached to a control panel.

According to (((2))) of the present disclosure, the expander is easily formed compared to a case not employing the structure where the expander is formed at an edge portion of a control panel cover.

According to (((3))) of the present disclosure, effects on visibility caused by a change of an angle of the control panel is further reducible compared to a case not employing the structure where the edge portion at which the expander is formed extends in the axial direction of rotation.

According to (((4))) of the present disclosure, effects on visibility caused by a change of an angle of the control panel is further reducible compared to a case not employing the structure where, among a portion located near a rotation axis and a portion located far from the rotation axis, the edge portion is located at the near portion.

According to (((5))) of the present disclosure, the surface of the expander on which light from the light emitter is incident has improved viewability compared to a case not employing the structure where the surface of the expander on which light from the light emitter incident is a flat surface extending in an axial direction of the rotation.

According to (((6))) f the present disclosure, a restrictor is capable of performing an operation corresponding to the function exerted by an operation button compared to a case not employing the structure including a first restrictor that restricts an operation by covering the entire surface of the operation button serving as an operable portion, and a second restrictor that restricts an operation by partially covering the operation button.

According to (((7))) of the present disclosure, the second restrictor is capable of more reliably reducing erroneous operations compared to a case not employing the structure where the operation button is operable with insertion of a member from an area other than the area partially covered by the operation button.

According to (((8))) of the present disclosure, an attachment member is capable of improving the performance of an attachment or detachment operation compared to a case not employing the structure where the attachment member is removably attached to the control panel by being formed to extend across three of four sides of the control panel, and including a cut in a middle portion of the remaining one side of the four sides, the remaining one side having two end portions that are left uncut.

According to (((9))) of the present disclosure, the expander is easily formed compared to a case not employing the structure where the expander is formed at the middle portion of the remaining one side.

According to (((10))) of the present disclosure, a distance between the restrictor and the touch screen is more reliably ensured compared to a case not employing the structure where the rib-shaped portion extends in a direction crossing the remaining one side.

According to (((11))) of the present disclosure, the cost increase is reducible compared to a case where the luminous intensity of the light emitter is enhanced to address reduction of the viewability of light from the light emitter when the control panel cover is attached to the control panel.

## Claims

1. A control panel cover, comprising:
an attachment member that allows the control panel cover to be attached to a control panel that at least includes an operable portion to be operated by a user and a light emitter that conveys information to the user with light emitted by the light emitter;
a restrictor that restricts an operation to be performed on the operable portion when the control panel cover is attached to the control panel using the attachment member; and
an expander that is located in an area irradiated by the light emitter with the light emitted from the light emitter when the control panel cover is attached to the control panel using the attachment member, to expand an area irradiated with the light.

2. The control panel cover according to claim 1,
wherein the expander is disposed at an edge portion of the control panel cover.

3. The control panel cover according to claim 2,
wherein an orientation of a surface of the control panel on which the operable portion is disposed is changeable by rotation, and
wherein the edge portion at which the expander is disposed extends in an axial direction of the rotation.

4. The control panel cover according to claim 3,
wherein, among a portion located close to the rotation axis and a portion located far from the rotation axis, the edge portion is the portion located close to the rotation axis.

5. The control panel cover according to claim 3 or 4,
wherein a surface of the expander on which light from the light emitter is incident is a flat surface extending in the axial direction of the rotation.

6. The control panel cover according to any one of claims 1 to 5,
wherein the restrictor includes
a first restrictor that restricts an operation to be performed on an operation button serving as the operable portion by covering an entirety of the operation button, and
a second restrictor that restricts an operation to be performed on the operation button by partially covering the operation button.

7. The control panel cover according to claim 6,
wherein the second restrictor enables an operation to be performed on the operation button with an insertion of a member from an area other than a partially covered area of the operation button.

8. The control panel cover according to claim 1,
wherein a surface of the control panel on which the operable portion is disposed has a shape having four sides, and
wherein the attachment member is attachable to and removable from the control panel while being disposed to extend across three of four sides of the control panel, and including a cut in a middle portion of the remaining one side of the four sides, the remaining one side having two end portions that are left uncut.

9. The control panel cover according to claim 8,
wherein the expander is disposed at the middle portion of the remaining one side.

10. The control panel cover according to claim 8 or 9,
wherein the operable portion is a touch screen,
wherein the attachment member includes a rib-shaped portion to retain a distance between the restrictor and the touch screen, and
wherein the rib-shaped portion extends in a direction crossing the remaining one side.

11. An image forming apparatus, comprising:
the control panel cover according to claim 1.
